# EUROPEAN PATENT APPLICATION

(11) **EP 4 403 347 A1**
(43) Date of publication of application: **24.07.2024**
(21) Application number: 23151899.4
(22) Date of filing: 17.01.2023
(51) Int. Cl.: B32B 5/02, B32B 5/08, B32B 5/26, B32B 7/12, B32B 29/02, B32B 21/02, B32B 21/10

(54) **PANEL COMPRISING OF POLYESTER FIBRE PANELS WITH A SURFACE COVERING**

(71) Applicant: Covestro (Netherlands) B.V., 6167 RD Geleen (NL)
(72) Inventor: Udding, Henk-Jan, 8014 AK ZWOLLE (NL); de Knoop, Erik, 7433 CR Schalkhaar (NL)
(74) Representative: Levpat

(57) **Abstract**

The present invention relates to a panel with a density between 400 and 1200 kg/m³ based on non-woven substrate comprising polyester fibres of at least a first polyester and a second polyester, wherein the panel comprises at least one layer of non-woven substrate and wherein the panel has an outer surface at the top and an outer surface at the bottom to which each a surface layer is applied, optionally by use of an adhesive.

## Description

The invention is directed to a panel with a density between 400 and 1200 kg/m³ based on non-woven substrate, the preparation and recycling of said panel as well as the use of the panel for e. g. furniture and interior.

Panels made of polyester fiber non-wovens are known e. g. in CA2046424A1 and are used for acoustic panels. These panels are also called soft panels because they are produced from polyester non-wovens which are only slightly compressed via hot calendering to tune the required panel stiffness and acoustic properties. However, these soft panels do not qualify for applications like furniture or interior due to a lack of mechanical strength. Therefore, particle board or MDF are used to reach the mechanical strength for furniture and interior. The disadvantage of particle board or MDF is the high weight and flammability. Further, there is a demand for applications where recycled plastics, like PET bottles, can be re-used.

It is therefore an object of the invention to provide a lightweight panel with improved flexural modulus, where preferably recycled PET can be used.

This object was surprisingly solved by a panel with a density between 400 and 1200 kg/m³ based on non-woven substrate comprising polyester fibres of at least a first polyester and a second polyester, wherein the panel comprises at least one layer of non-woven substrate and wherein the panel has an outer surface at the top and an outer surface at the bottom to which each a surface layer is applied, optionally by use of an adhesive.

A non-woven substrate consists of fibres which are not woven or knitted but bonded together by chemical, mechanical, heat or solvent treatment. For the chemical bonding of a non-woven a chemical binder like latex is used which is for example sprayed onto the non-woven. A mechanical process is for example carding of the staple fibers, intermingling them with a needling process which can be repeated and air engaging. According to the invention, the non-woven substrate comprises fibres of at least a first polyester and a second polyester. Preferably, the fibres of the first polyester have a melting point in the range of from 220 to 290°C, preferably 230 to 270°C, and the fibres of the second polyester have a melting point in the range of from 50 to 170°C, preferably 50 to 150°C. It is preferred that the first polyester is a recycled polyester fibre, for example from recycled plastic bottles, and the second polyester is a melt fibre. In another embodiment the non-woven substrate comprises a bicomponent polyester fibre, preferably with a core of the first polyester and a shell of the second polyester. It is then preferred that the non-woven substrate comprising the bicomponent polyester fibre with a core of the first polyester and a shell of the second polyester further comprises fibres different to the bicomponent fibres, preferably polyester fibres.

It is further preferred that the non-woven comprises 5 to 55 wt.-% of the second polyester, more preferably 10 to 30 wt.-%, most preferably 15 to 25 wt.-%, based on the weight of all polyester fibres.

The polyesters may be for example polycondensates of polyhydric alcohols, preferably diols, having 2 to 12 carbon atoms, preferably having 2 to 6 carbon atoms, and polycarboxylic acids, for example di-, tri- or even tetracarboxylic acids or hydroxycarboxylic acids or lactones, and it is preferable to employ aromatic dicarboxylic acids or mixtures of aromatic and aliphatic dicarboxylic acids. Also employable for preparing the polyesters instead of the free polycarboxylic acids are the corresponding polycarboxylic anhydrides or corresponding polycarboxylic esters of lower alcohols. It is preferable to use phthalic anhydride, terephthalic acid and/or isophthalic acid, most preferably terephthalic acid.

Contemplated carboxylic acids especially include: succinic acid, glutaric acid, adipic acid, suberic acid, azelaic acid, sebacic acid, decanedicarboxylic acid, tetrahydrophthalic acid, hexahydrophthalic acid, cyclohexanedicarboxylic acid, tetrachlorophthalic acid, itaconic acid, malonic acid, 2-methylsuccinic acid, 3,3-diethylglutaric acid, 2,2-dimethylsuccinic acid, dodecanedioic acid, endomethylenetetrahydrophthalic acid, dimer fatty acid, trimer fatty acid, citric acid, trimellitic acid, benzoic acid, trimellitic acid, naphthalene dicarboxylic acid, maleic acid, fumaric acid, phthalic acid, isophthalic acid and terephthalic acid. It is likewise possible to use derivatives of these carboxylic acids, for example dimethyl terephthalate. The carboxylic acids may be used either singly or in admixture. Preferably employed as carboxylic acids are terephthalic acid, isophthalic acid and/or naphthalene dicarboxylic acid.

Examples of suitable diols are ethylene glycol, butylene glycol, diethylene glycol, triethylene glycol, polyalkylene glycols such as polyethylene glycol, and also propane-1,2-diol, propane-1,3-diol, butane-1,3-diol, butane-1,4-diol, hexane-1,6-diol and isomers, neopentyl glycol or neopentyl glycol hydroxypivalate. Preference is given to using ethylene glycol, diethylene glycol, butane-1,4-diol, pentane-1,5-diol, hexane-1,6-diol or mixtures of at least two of the diols mentioned, in particular mixtures of butane-1,4-diol, pentane-1,5-diol and hexane-1,6-diol.

It is additionally also possible to use polyols such as trimethylolpropane, glycerol, erythritol, pentaerythritol, trimethylolbenzene or trishydroxyethyl isocyanurate, wherein glycerol and trimethylolpropane are preferred.

It is most preferred that the first polyester and second polyester are based on terephthalic acid and at least one diol.

In another preferred embodiment, the non-woven substrate is free of fire-retardant additives.

A panel in general is a solid, self-supporting (dimensionally stable) substantially two dimensional object, i.e. a broad and thin, having length and width dimensions that are at least 10 times larger than its height dimension, preferably at 10 to 1000 times longer or wider than its height (i.e. it's thickness in the direction of its smallest dimension), which object is typically but not necessarily rectangular, typically but not necessarily flat (the panel may be curved, corrugated, etc.), and usually forms or is set into the surface of a larger substrate such as a door, a wall, a ceiling, a piece of furniture, a tray etc.

The panel according to the invention comprises at least one layer of a non-woven substrate comprising at least a first polyester and a second polyester wherein the panel has an outer surface at the top and an outer surface at the bottom to which each a surface layer is applied. A surface layer is an object to cover the surface of the panel, such as veneer or other surface laminates. The surface layers can be applied to the outer surfaces of the panel e. g. by pressing or by an adhesive between surface layer and the layer of non-woven substrate to which the surface layer is applied.

Preferably, the surface layer comprises compressed cellulosic fibres like HPL laminates based on e.g., paper and phenolic resins and preferably has a density in the range of from 500 to 2000 kg/m³, more preferably from 800 to 1500 kg/m³. Preferably, each surface layer has a thickness of at least 0.1 mm, more preferably 0.1 to 5 mm. Optionally, a further decorative layer, like tapestry or textile layer, such as carpet, can be applied to the surface layer of the panel.

In a preferred embodiment, the panel comprises at least two layers of non-woven substrates, more preferred 3 to 5 layers of non-woven substrates. The non-woven substrates can be attached to each other e. g. by pressing or by applying an adhesive between each layer of non-woven substrate.

The panel may be prepared by putting the surface layers and the at least one layer of non-woven substrate together into a press. The at least one layer of non-woven substrate can also be compressed before putting it into the press. It is also possible to put only the at least one non-woven substrate into the press and apply after compression of the at least one non-woven substrate an adhesive onto the outer surfaces of the at least one non-woven substrate and then attach the surface layers onto the outer surfaces of the at least one non-woven substrate. The press can be heated, cooled or operated at room temperature. The press force of the press is preferably in the range of from 0.05 to 0.5 N/mm², preferably from 0.1 to 0.4 N/mm². The press time is preferably 15 minutes and less, more preferably in the range of from 2 to 10 minutes. The compression rate of the at least one layer of non-woven substrate is preferably in the range of from 1.2 to 6.0, more preferably from 1.4 to 2.6.

In a preferred embodiment of the invention, a hot melt adhesive is applied in solid form to the at least one-non woven substrate and the surface layers, wherein the panel according to the invention is obtained by pressing in a first step at a temperature in the range of from 100 to 200°C with a press force in the range of from 0.05 to 0.15 N/mm² to melt the hot melt adhesive and pressing in a second step at a temperature in the range of from 10 to 25°C and a press force in the range of from 0.15 to 0.5 N/mm².

Each layer of non-woven substrate in the obtained panel has preferably a thickness of 2 to 20 mm, more preferably of 2 to 10 mm and most preferably of 3 to 7 mm. The obtained panel has preferably a thickness of 2 to 60 mm, more preferably 6 to 30 mm and most preferably 6 to 22 mm.

Recycling of the panel is preferably carried out by separating the surface layer from the non-woven substrate, more preferably by granulating the non-woven substrate, followed by melt extrusion and solid-state post condensation. In another preferred embodiment, the panel comprises a hot melt adhesive and is de-assembled by heating the hot melt adhesive to above the melting point of the hot melt adhesive. The adhesive is preferably a hot melt adhesive which is a thermoplastic adhesive that is designed to be melted, *i.e*., heated to above a melting temperature to transform from a solid state into a liquid state, (the melting temperature may be a melting range of a few degrees or more) and to adhere materials after solidification. Hot melt adhesives are typically non-reactive, (partly) crystalline and comprise low (less than 5, preferably even less than 1 mass %) or no amount of solvents so curing and drying are typically not necessary in order to provide adequate adhesion. In the liquid state the adhesive has a suitably low viscosity, is tacky and solidifies rapidly after cooling down to below its melting temperature (typically in a few seconds to one minute), with little or no drying needed. Unlike a pressure sensitive adhesive, a hot melt adhesive is not permanently tacky. Unlike solvent based adhesives, a hot melt adhesive does not shrink substantially or lose thickness as it solidifies.

Useful hot melt adhesives suitable for use in the present invention may comprise a Polymer P present as a main constituent (i.e., in an amount of at least 50% by weight of the adhesive composition). Conveniently the hot melt adhesive comprises at least 60%, more conveniently at least 70%, most conveniently at least 80% of Polymer P by weight of the adhesive composition. Usefully the Polymer P and/or the hot-melt adhesive may be substantially bio-based (i.e., using naturally occurring materials). Polymer P is a thermoplastic polymer that is at least partly crystalline. Conveniently Polymer P is semi crystalline. Polymer P may have a melting point from 40 to 250°C where the polymer is other than polyamide and where Polymer P comprises polyamide a melting point from 40 to 215°C. Usefully Polymer P has a melting point from 40 to 200°C, more usefully from 40 to 150°C and most usefully from 70 to 120°C, for example about 110°C.

By "crystalline" is meant herein that polymer has a melting enthalpy (ΔHm) of at least 5 J/g, preferably at least 8 J/g, more preferably of at least 10 J/g, most preferably at least 15 J/g. A person skilled in the art would appreciate that many crystalline materials are not fully crystalline but have a degree of crystallinity which is less than 100%, preferably from 2 to 98%, more preferably from 5 to 90 %, most preferably from 10 to 80%. Such materials comprise a mixture of phases such as domains of amorphous material and domains of crystalline material (e.g., where polymer chains are substantially aligned) and are often referred to by the informal term "semi-crystalline". The different domains can be seen for example under a polarised light microscope and/or by transmission electron microscopy (TEM). The degree of crystallinity of a 'semi-crystalline' material may be measured by any suitable method such as by measuring density, by differential scanning calorimetry (DSC), by X-ray diffraction (XRD), by infrared spectroscopy and/or by nuclear magnetic resonance (NMR).

Polymer P may have a glass transition temperature below 100°C, advantageously below 80°C, more advantageously below 70°C, even more advantageously below 50°C and most advantageously below 40°C.

Polymer P may have a melt viscosity (all measured at 150°C) of less than 500 Pa.s, usefully less than 300 Pa.s, more usefully less than 200 Pa.s, most usefully less than 100 Pa.s. In one embodiment of the invention the Polymer P may have a melting point from 40 to 150°C, a glass transition temperature below 50°C and a melt viscosity at 150°C of less than 500 Pa.s. In another embodiment of the invention the Polymer P may have a melting point from 40 to 150°C, a glass transition temperature below 50°C and a melt viscosity at 150°C of less than 300 Pa.s. In yet another embodiment of the invention the Polymer P may have a melting point from 70 to 120°C, a glass transition temperature below 40°C and a melt viscosity at 150°C of less than 200 Pa.s.

In any of the embodiments the Polymer P is most preferably a (co)polyester. Polymer P may be a polymer obtained and/or obtainable by a polycondensation, a ring opening polymerisation of cyclic monomers and/or a step-growth polymerisation method. Polymer P may comprise one or more polymer or copolymer selected from the group consisting of: (co)polyurethane(s); (co)polycarbonate(s); (co)polyester(s), (co)polyamide(s);(co)poly(ester-amide(s); mixtures thereof and/or copolymers thereof. Although Polymer P can also comprise (co)polyurethane and/or a(co)polycarbonate type polymer(s) preferably Polymer P comprises (co)polyester(s), (co)polyamide(s) and/or poly(ester-amide)(s). More preferred Polymer P is obtained by a polycondensation and/or by a ring opening polymerisation of cyclic monomers (e.g., cyclic ester and/or cyclic amide). Even more preferred Polymer P comprises (co)polyester(s), most preferably polyester(s).

Preferably the weight average molecular weight (Mw) of the Polymer P is < 500000 g/ mol, more preferably < 250000 g/mol and most preferably < 100000 g/mol. Preferably the weight average molecular weight (Mw) of the Polymer P is > 1000 g/mol more preferably > 3500 g/mol and most preferably > 5000 g/mol. Preferably the weight average molecular weight (Mw) of the Polymer P is from 100 to 500000 g/mol, more preferably from 3500 to 250000 g/mol and most preferably from 5000 to 100000 g/mol. Preferably the number average molecular weight (Mn) of the Polymer P is < 300000 g/ mol, more preferably < 100000 g/mol and most preferably < 50,000 g/mol. Preferably the number average molecular weight (Mn) of the Polymer P is > 500 g /mol more preferably > 1000 g/mol and most preferably > 2000 g/mol. Preferably the number average molecular weight (Mn) of the Polymer P is from 100 to 300000 g/mol, more preferably from 500 to 100000 g/mol and most preferably from 2000 to 50000 g/mol.

Usefully the weight average molecular weight (Mw) of the Polymer P (especially where they comprise polyester) is > 3500 g/mol, more usefully > 5000 g/mol, most usefully > 8000 g/mol and especially > 10000 g/mol. Usefully the weight average molecular weight (Mw) of the Polymer P (especially where they comprise polyester) is < 75000 g/mol, more usefully < 60000 g/mol, most usefully < 50000 g/mol and especially < 40000 g/mol. Usefully the weight average molecular weight (Mw) of the Polymer P (especially where they comprise polyester) is from 3500 to 75000 g/mol, more usefully from 5000 to 60000 g/mol, most usefully from 8000 to 50000 g/mol and especially from 10000 to 40000 g/mol, or even from 15000 to 30000 g/mol.

Usefully the number average molecular weight (Mn) of the Polymer P (especially where they comprise polyester) is > 1500 g/mol, more usefully > 2000 g/mol, most usefully > 3000 g/mol and especially > 5000 g/mol. Usefully the number average molecular weight (Mn) of the Polymer P (especially where they comprise polyester) is < 60000 g/mol, more usefully < 50000 g/mol, most usefully < 40000 g/mol and especially < 30000 g/mol. Usefully the number average molecular weight (Mn) of the Polymer P (especially where they comprise polyester) is from 1500 to 60000 g/mol, more usefully from 2000 to 50000 g/mol, most usefully from 3000 to 40000 g/mol and especially from 5000 to 30000 g/mol.

The molecular weight distribution (MWD) of the polymer may influence properties such as the equilibrium viscosity of the compositions comprising them. MWD is conventionally described by the polydispersity index (PDI). PDI is defined as the weight average molecular weight divided by the number average molecular weight (Mw/Mn) where lower values are equivalent to lower PDI's.

Preferred amines and derivatives thereof that may be used to obtain a Polymer P comprise any alkyl-, alkanol-, alkoxyalkyl-, di- and polyamines, as well as amino acids, lactams and similar materials; ethylene diamine, butylene diamine, hexamethylene diamine, isophorone diamine, 2-Methylpentamethylenediamine, 1,3-pentanediamine, dimer fatty diamine (e.g. available from Croda under the trade mark Priamine^{®}), ethanolamine, diethanol amine, isopropanol amine, diisopropanol amine, caprolactam, laurolactam, lysine, glycine and/or glutamine. Thus, it is well known that polyesters, which contain carbonyloxy (i.e. -C(=O)-O-) linking groups may be prepared by a condensation polymerisation process in which monomers providing an "acid component" (including ester-forming derivatives thereof) are reacted with monomers providing a "hydroxyl component".

The monomers providing an acid component may be selected from one or more polybasic carboxylic acids such as di- or tri-carboxylic acids or ester-forming derivatives thereof such as acid halides, anhydrides or esters. The monomers providing a hydroxyl component may be one or more polyhydric alcohols or phenols (polyols) such as diols, triols, etc. It is to be understood, that the polyester resins described herein may optionally comprise autoxidisable units in the main chain or in side chains and such polyesters are known as autoxidisable polyesters. If desired the polyesters may also comprises a proportion of carbonylamino linking groups -C(=O)-NH- (i.e., amide linking group) or -C(=O)-N-R²-(tertiary amide linking group) by including an appropriate amino functional reactant as part of the hydroxyl component or alternatively all of the hydroxyl component may comprise amino functional reactants, thus resulting in a polyester amide resin. Such amide linkages are in fact useful in that they are more hydrolysis resistant.

Elastomeric polyols may also be used as building blocks to prepare the Polymer P (e.g., a polyester) and suitable polyols may comprise dihydroxy-terminated polytetrahydrofuran (polyTHF), dihydroxy-terminated polypropylene glycol, dihydroxy-terminated polybutylene succinate, dihydroxy-terminated polybutylene adipate; other aliphatic polyesters with Tg below zero and two OH end groups; and/or any mixtures thereof and/or any combinations thereof. Examples of suitable copolyester elastomers that may be obtainable and/or obtained from such polyols are those available from DSM under the trademark Arnitel^{®}.

The (co)polyester and other resins described herein as suitable for Polymer P may also comprise acidic moiet(ies) other than carboxylic acid moieties for example where the resin is prepared from a strong acid such as sulfonated acids, phosphonated acids, derivatives thereof (e.g., esters) and/or salts thereof (e.g., alkali metal salts). Preferred non-carboxylic acid moiet(ies)comprises neutralized or partially neutralized strong acid group selected from sulfonated moieties, phosphonated moieties and/or derivatives thereof, more preferably is an aromatic sulfonated acid or salt thereof, most preferably is an alkali metal sulfo salt of a benzene dicarboxylic acid, for example is represented by formula:

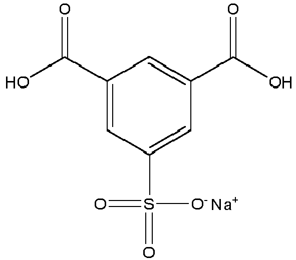

### Sodium salt of 5-(sulfo)isophthalic acid (SSIPA)

Preferably the weight average molecular weight (Mw) of the polyester amide resin or urethanised polyester(-amide) resin is < 20,000 g / mol, more preferably < 12,000 g/mol and most preferably < 9,000 g/mol. Preferably the polyester amide resin or autoxidisable urethanised polyester(-amide) resin has a PDI less than 8, more preferably a PDI less than 5.5, most preferably a PDI less than 4.0. Preferably the polyester amide resin or urethanised polyester(-amide) resin has a carbonyl amine content (defined as the presence of NH-C=O or N-C=O in mmoles / 100 g solid resin) of at least 10 mmoles/100 g solid resin, more preferably at least 20 mmoles/100 g, most preferably at least 50 mmoles/100 g solid resin and especially at least 65 mmoles/100 g solid resin.

In addition, the polyester amide resin or urethanised polyester(-amide) resin preferably has a carbonyl amine content (defined as the presence of NH-C=O or N-C=O in mmoles/100 g solid resin) of less than 500 mmoles/100 g solid resin, more preferably less than 400 mmoles/100 g solid resin, most preferably less than 300 mmoles / 100 g solid resin and especially less than 225 mmoles/100 g solid resin.

In one embodiment Polymer P comprises a (co)polyester, characterised in that the (co)polyester is obtained and/or obtainable from reacting at least one acid selected from terephthalic acid, 2,5-furanedicarboxylic acid, adipic acid, fumaric acid, dimer fatty acid, sebacic acid, azelaic acid, succinic acid, and/or combinations thereof with at least one alcohol selected from ethylene glycol, 1,6-hexandediol, 1,4-butanediol, dimer fatty acid diol and/or combinations thereof. Usefully the hot melt adhesive used in the present invention comprises (in addition to the Polymer P) up to maximally 50 % by weight of optional ingredients selected from, tackifiers, waxes, plasticizers, nucleating agents, antistatic agents, neutralising agents, adhesion promoters, pigments, dyes, emulsifiers, surfactants, thickeners, heat stabilisers, levelling agents, anti-cratering agents, fillers, sedimentation inhibitors, UV absorbers, antioxidants, dispersants, defoamers, co-solvents, wetting agents, reactive diluents and the like and/or combinations thereof introduced at any stage of the production process or subsequently. If present any reactive diluents have an Mn > 1000 g/mol, more preferably > 1500 g/mol and most preferably > 2000 g/mol and preferably an Mn < 5000 g/mol, more preferably < 4000 g/mol and especially < 3500 g/mol. It is also possible to include fire retardants like antimony oxide in the adhesive to enhance the fire-retardant properties of the adhesive.

Some non-limiting examples of tackifiers include tall oil, gum or wood rosin either unmodified, partially hydrogenated, fully hydrogenated or disproportionated, polymerized rosins, rosin derivatives such as rosin esters, phenolic modified rosin esters, acid modified rosin esters, distilled rosin, dimerised rosin, maleated rosin, and polymerized rosin; hydrocarbon resins including aliphatic and aromatic resins, coumarone-indene resins, polyterpenes, terpene-phenolic resins, maleic resins, ketone resins, reactive resins, hybrid resins and polyester resins.

Plasticisers can be used to reduce the glass transition temperature (Tg) of the polymer. Some non-limiting examples of a plasticizer include benzoate esters, phthalate esters, citrate esters, phosphate esters, terephthalate esters, isophthalate esters, or combinations thereof. As is well known to a skilled person other suitable commercially available plasticisers can also be used to prepare hot melt adhesives for use in the present invention.

The adhesive also can comprise one or more compatible waxes to improve the bond strength, prevent or reduce cold flow, and to decrease set time. Some non-limiting examples are 12-hydroxystearamide, N-(2-hydroxy ethyl)-12-hydroxystearamide, stearamide, glycerine monostearate, sorbitan monostearate, 12-hydroxy stearic acid, N,N'-ethylene-bis-stearamide, hydrogenated castor oil, oxidized synthetic waxes, and functionalized synthetic waxes such as oxidized polyethylene waxes.

Nucleating agents may be used with the adhesive composition to modify and control crystal formation. The terms "nucleating agent" and "nucleator" are synonymous and refer to a chemical substance which when incorporated into polymers form nuclei for the growth of crystals in the polymer melt. Any incompatible material can serve as a nucleator provided that it rapidly separates into particles as the molten adhesive cools. There are a wide variety of organic and inorganic materials known as nucleating agents that skilled person would be able to select as suitable for use in the present invention. Low molecular weight polyolefins and/or olefinic ionomers with a melt temperature from 70°C to 130°C or talcum are non-limiting examples of suitable nucleating agents that could be used in the present invention.

Preferred hot melt adhesives that are suitable for use in the present invention exhibit one or more (more preferably all) of the following properties: They can be applied (in a molten state) at a temperature from 40 to 180°C, preferably from 40 to 150 °C and more preferably from 70 to 130°C; they have a viscosity of less than 500 Pa.s, preferably < 250 Pa.s at 150°C; they have a melt temperature (also denoted Tₘ) of from 40 to 150°C; and a crystallisation temperature (also denoted T_{c}) of from 60 to 130 °C. In particular preferred are such hot melt adhesives when exhibiting a melt viscosity typically even below 150 Pa.s. Hot melt adhesives that are particularly suitable for use in the present invention is a polyester adhesive having a crystallinity between 5% and 40% and a viscosity of 5-55 Pa.s at 150°C. Regarding the crystallinity, this can have any value between 5 and 40% such as 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38 and 39%. Typical ranges are 5-30 and 10-30%. Regarding the melt viscosity, this may have any value between 5 and 55 Pa.s such as 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53 and 54 Pa.s. Tₘ and T_{c} may be obtained by any suitable method such as Differential Scanning Calorimetry (DSC). If melting and/or crystallisation of a sample is observed over a temperature range, the Tₘ and/or T_{c} values are recorded as the peak (maximum) temperature observed in this range. The viscosity of a polymer adhesive can be measured by using a cone and plate viscometer (Brookfield CAP 2000+, available from Brookfield Ametek, Middleboro, MA, USA) with a 24 mm diameter spindle and a cone angle of 1.8 degrees (Brookfield Cap 2000+ spindle #4). Samples are heated to 150°C. At 150°C the spindle is lowered on the sample. The sample is measured at 21 rpm for 30 seconds. The viscosity is determined automatically by the viscometer's default algorithm.

In another embodiment the layer of hot melt adhesive has a thickness of between 50 and 400 g/m². In particular the thickness is 51, 55, 60, 65, 70, 75, 80, 85, 90, 85, 100, 105, 110, 115, 120, 125, 130, 135, 140, 145, 150, 155, 160, 165, 170, 175, 180, 185, 190, 195, 200, 210, 220, 230, 240, 250, 260, 270, 280, 290, 300, 310, 320, 330, 334, 350, 360, 370, 380, 390, 399 g/m² or any thickness in between two consecutive temperatures as explicitly mentioned. At a thickness below 50 g/m² the bonding of the surface covering to the panel may not be strong enough, depending on the type of panel, to provide for a durable bonding, mainly due to the presence of areas without the required amount of adhesive to fill up unevenness in the surface. At a thickness above 400 g/m² the bonding may also be not strong enough, mainly depending on the particular materials used and the type and level of forces exerted on the object, due to the brittle nature of a thick layer of solid hot melt adhesive.

In yet another embodiment the layer of hot melt adhesive is heated by using radiation. It was found that by using radiation, such as microwaves, infrared light or other types of radiation, a very advantageous method of providing sufficient heat to the adhesive can be obtained. The advantage namely is that the substrates themselves (i.e., the panel and surface covering) do not need to be heated, at least not to the same overall temperature as the hot melt adhesive. This not only leads to an increased energy efficiency, but provides more freedom to use particular materials for the panel and surface covering which could not be used if one or more of these items also needed to be heated to above a temperature at which the hot melt adhesive melts. A potential downside of immediate cooling down of the hot melt adhesive when coming in contact with the colder panel and/or surface covering, can also be turned into an advantage, namely increased process speed.

In still another embodiment the layer of hot melt adhesive is provided by connecting this layer to a surface of the panel before the panel and surface covering are brought in the spatially aligned relationship. In the art (e.g., US 4,089,721 and US 9,039,862) the hot melt adhesive is applied (and therewith connected) to the surface covering, and thereafter, the heated surface covering is pressed to a panel to provide a durable bonding. Apparently, it has always been found easier to heat the hot melt adhesive when present on a carrier with a small heat capacity and also, the provision of most surface coverings is a process that already implies stacking different layers of materials together. Therefore, in the art the hot melt adhesive layer has consistently been applied to the surface covering. It was applicant who recognized that it is advantageous however to apply the hot melt adhesive to the panel. The surface covering is more vulnerable to mechanical impact and any additional process step increases the risk of damaging the surface of the covering (which surface usually is the aesthetic surface of an object to be made). Also, by applying the hot melt adhesive to the more robust panel, the use of surface coverings in other types of processes (for example using reactive or solvent adhesives) is not impaired due to the presence of a hot melt layer. This leaves all options open for the manufacturer of the end product, in particular by having the option, when desiring to design an object that is easy to recycle in accordance with the invention, to choose standard surface coverings and applying these standard surface coverings on panels previously provided with a layer of hot melt adhesive, or in the alternative, when design-for-reuse is not desired, to use these standard surface coverings in a traditional way by using traditional types of adhesives.

In a further embodiment, the layer of hot melt adhesive is applied to the surface of the panel using a roller provided with a mass of molten hot melt adhesive. Although panels are not able to adapt their form to the circumference of a roller, and also, although hot melt guns, and other devices have been found suitable for applying a layer of hot melt adhesive to a (rigid) panel, it has been found that a roller, can be advantageously used to apply a hot melt adhesive for use in the present invention.

In yet a further embodiment, the layer of hot melt adhesive is cooled down to a temperature below the melting temperature of the hot melt adhesive before the panel and surface covering are brought in the spatially aligned relationship. It has been found that it is advantageous before the actual bonding step takes place to cool the hot melt adhesive to form a solid, non-tacky layer. This provides the option for a quality check of the layer before actual bonding takes place and also, to have a more flexible producing process wherein firstly a set of multiple panels provided with a layer of hot melt adhesive are produced, and only after some time this set of panels is covered in a separate process with the surface covering. Hot melt adhesive remains stable when cooled down and due to its non-tacky nature, there is no substantial risk of deterioration of the layer by absorbing exogenous material. For example, the layer of hot melt adhesive is provided at a location remote from a production location of the object (i.e. situated at some distance away from the production location of the object, as opposed to at the same site, i.e. the exact location, of the actual production, e.g. in another production hall, at another production site, or in another country etc), wherein the panel provided with the layer of hot melt adhesive is transported to the production location.

The panels according to the invention are suitable for furniture, like interior home furniture such as kitchen cabinets, exterior home furniture, office furniture, events furniture such as stand building, or shop-in-shop furniture, for building environment, like flooring, interior walls systems, interior doors, exterior doors, insulation panels systems, for transportation, like trains, campers, boats, trucks, cars, cruise ships, yachts and for packaging, like flight cases.

### Examples

| | |
|---|---|
| Substrate A | non-woven substrate of 40 wt.-% bicomponent polyester fibre with a core of polyethylenterephthalate with a melting point of 255°C and a shell of polyethylenterephthalate with a melting point of 120°C in a weight ratio of 1:1, and 60 wt.-% of a polyethylenterephthalate fibre having a melting point of 256°C, having a thickness of 9 mm. |
| Substrate B | the same composition as Substrate A but compressed to a thickness of 7 mm |
| Surface Layer A | high compressed laminate (HPL) of multiple paper sheets and melamine resin with a density of 1350 kg/m³ |
| Surface Layer B | board of 100% cellulosic fibre and water with a density of 1200 kg/m³ |
| Surface Layer C | board of 100% cellulosic fibre and water with a density of 1000 kg/m³ (Maplex K) |
| Surface Layer D | board of 100% cellulosic fibre and water with a density of 1000 kg/m³ (Maplex MD) |
| Hot melt adhesive | powdered polyester hot melt with a melting point of 120°C |

The compression ratio is calculated by the difference of the total thickness of the panel without the surface layers compared to the thickness of the non-woven substrates prior to the pressing step.

The flexural modulus is measured according to EN310.

The density of the panels in table 1 and 2 are calculated by measuring the size, thickness and weight of the samples. Meaning, all densities are average numbers of the combination of substrate and surface layer.

The panels are prepared by first applying 220 g/m² of a granulate polyester hot melt adhesive to the upper surface and 220 g/m² to the lower surface of the non-woven substrates of the dimension of 2440 x 1220 (length x width) at a temperature of 130°C to obtain a double-coated non-woven substrate. After cooling, the double-coated non-woven substrate is stacked with two surface layers at the outer surface in a press. In the case that more than one substrate layer is used, single-coated non-woven substrates are added to the double-coated non-woven substrate so that between each of the non-woven substrates is one layer of hot melt adhesive as well as between the surface layer and the non-woven substrates. The non-woven substrates and the surface layers are pressed at 175°C at a force of 0.1 N/mm² followed by cooling in a cold press with 16 mm aluminum spacer at 18°C at a force of 0.3 N/mm². The number of layers, the surface layer and the measurements of each example are shown in table 1 for panels comprising non-woven Substrate A and table 2 for panels comprising non-woven Substrate B.

**Table 1: Results for panels comprising non-woven Substrate A**

| **Example** | **Substrate layers #** | **Adhesive layers #** | **Surface layer** | **Surface layer thickness mm** | **Surface layers #** | **Compression ratio*** | **Total panel thickness mm** | **Density kg/m³** | **Flexural Modulus MPa** |
|---|---|---|---|---|---|---|---|---|---|
| 1* | 1 | 0 | - | 0 | 0 | 1,0 | 9 | 205 | n.d. |
| 2 | 1 | 2 | A | 0.7 | 2 | 1.2 | 9 | 517 | 2352 |
| 3 | 1 | 2 | A | 0.7 | 2 | 1.4 | 8 | 579 | 3377 |
| 4 | 1 | 2 | A | 0.7 | 2 | 1.6 | 7 | 666 | 5620 |
| 5 | 1 | 2 | A | 0.7 | 2 | 2.0 | 6 | 798 | 7146 |
| 6 | 1 | 2 | A | 0.7 | 2 | 2.5 | 5 | 943 | 8872 |
| 7 | 1 | 2 | A | 0.7 | 2 | 3.5 | 4 | 1018 | 8366 |
| 8* | 2 | 1 | - | 0 | 0 | 1.1 | 16 | 282 | 135 |
| 9 | 2 | 3 | A | 0.7 | 2 | 1.2 | 16 | 425 | 786 |
| 10* | 3 | 2 | - | 0 | 0 | 1.7 | 16 | 416 | 268 |
| 11 | 3 | 4 | A | 0.7 | 2 | 1.8 | 16 | 564 | 1785 |

| | | | | | | | | | |
|---|---|---|---|---|---|---|---|---|---|
| * Reference or comparative example n.d.: not determined | | | | | | | | | |

The results in table 1 show that panels according to the invention have improved flexural modulus compared to panels which are not according to the invention. Examples 1, 8 and 10 are panels without surface layer showing flexural modulus of less than 300 MPa. Examples 2 to 7 show panels with surface layers of 0.7 mm, one substrate layer and different compression ratios having flexural modulus of not less than 2000 MPa. Comparison of example 8 (comparative) with example 9 (inventive) and example 10 (comparative) with example 11 (inventive) show that by applying a surface layer to the same substrate results in a drastic increase of the flexural modulus.

The same is shown in table 2, wherein an already compressed substrate (example 12) is used. Panels without a surface layer and one substrate layer (example 12) or three substrate layers (example 13) have flexural modulus of less than 300 MPa. Panels according to the invention and based on the same non-woven substrates obtain flexural modulus of more than 500 MPa.

**Table 2: Results for panels comprising non-woven Substrate B**

| **Example** | **Substrate layers #** | **Adhesive layers #** | **Surface layer** | **Surface layer thickness mm** | **Surface layers #** | **Compression ratio*** | **Total panel thickness mm** | **Density kg/m3** | **Flexural Modulus MPa** |
|---|---|---|---|---|---|---|---|---|---|
| 12* | 1 | 0 | - | 0 | 0 | 1.0 | 7 | 259 | 218 |
| 13* | 3 | 2 | - | 0 | 0 | 1.3 | 16 | 404 | 285 |
| 14 | 3 | 4 | A | 0.7 | 2 | 1.4 | 16 | 555 | 1625 |
| 15 | 2 | 3 | B | 0.25 | 2 | 1.2 | 12 | 442 | 626 |
| 16 | 2 | 3 | C | 0.5 | 2 | 1.3 | 12 | 470 | 792 |
| 17 | 2 | 3 | D | 1 | 2 | 1.4 | 12 | 598 | 2613 |
| 18 | 2 | 3 | D | 2 | 2 | 1.8 | 12 | 726 | 4795 |
| 19 | 2 | 3 | D | 3 | 2 | 2.3 | 12 | 970 | 8076 |
| 20 | 3 | 4 | B | 0.25 | 2 | 1.4 | 16 | 473 | 577 |
| 21 | 3 | 4 | C | 0.5 | 2 | 1.4 | 16 | 488 | 866 |
| 22 | 3 | 4 | D | 1 | 2 | 1.5 | 16 | 584 | 1773 |
| 23 | 3 | 3 | D | 2 | 2 | 1.8 | 16 | 684 | 3141 |
| 24 | 3 | 3 | D | 3 | 2 | 2.1 | 16 | 873 | 5341 |

| | | | | | | | | | |
|---|---|---|---|---|---|---|---|---|---|
| * Reference or comparative example n.d.: not determined | | | | | | | | | |

## Claims

1. A panel with a density between 400 and 1200 kg/m³ based on non-woven substrate comprising polyester fibres of at least a first polyester and a second polyester, wherein the panel comprises at least one layer of non-woven substrate and wherein the panel has an outer surface at the top and an outer surface at the bottom to which each a surface layer is applied, optionally by use of an adhesive.

2. The panel as claimed in claim 1, wherein the panel comprises at least two layers of non-woven substrate which are adhered to each other by an adhesive.

3. The panel as claimed in claim 1 or 2, wherein the panel comprises 3 to 5 layers of non-woven substrates.

4. The panel as claimed in one of claims 1 to 3, wherein the surface layer has a density of 500 to 2000 kg/m³.

5. The panel as claimed in one of claims 1 to 4, wherein the surface layer comprises compressed cellulosic fibres.

6. The panel as claimed in one of claims 1 to 5, wherein a decorative layer is attached to at least one of the surface layers.

7. The panel as claimed in one of claims 1 to 6, wherein the adhesive is a hot melt adhesive, preferably a non-reactive hot melt adhesive.

8. The panel as claimed in claim 7, wherein the hot melt adhesive has a melting temperature in the range of from 40 to 180°C, preferably 40 to 150°C, more preferably 70 to 130°C.

9. The panel as claimed in one of claims 1 to 8, wherein the first polyester is a recycled polyester fibre and the second polyester is a melt fibre.

10. The panel as claimed in one of claims 1 to 9, wherein the second polyester is a bicomponent polyester fibre.

11. The panel as claimed in claim 10, wherein the bicomponent polyester fibre comprise a core of the first polyester and a shell of the second polyester.

12. The panel as claimed in one of the claims 1 to 11, wherein the first polyester and the second polyester are based on terephthalic acid and at least one diol.

13. Process for preparing a panel as claimed in one of the claims 1 to 12.

14. Use of the panel claimed in one of the claims 1 to 12 for furniture, building environment, transportation or packaging.

15. Recycling of the panel claimed in one of the claims 1 to 12.
